# EUROPEAN PATENT APPLICATION

(11) **EP 2 977 916 A1**
(43) Date of publication of application: **27.01.2016**
(21) Application number: 14771117.0
(22) Date of filing: 13.03.2014
(51) Int. Cl.: G06F 17/30

(54) **SEARCH SUGGESTION METHOD AND APPARATUS FOR MAP SEARCH, AND COMPUTER STORAGE MEDIUM AND DEVICE**

(30) Priority: 18.03.2013 CN 201310085022
(71) Applicant: Baidu Online Network Technology (Beijing) Co., Ltd, Beijing 100085 (CN)
(72) Inventor: WANG, Qingxiang, Beijing 100085 (CN)
(74) Representative: von Kreisler Selting Werner - Partnerschaft von Patentanwälten und Rechtsanwälten mbB
(86) International application number: PCT/CN2014/073351
(87) International publication number: WO 2014/146550

(57) **Abstract**

The present invention provides a search recommendation method and apparatus for map search, a computer storage medium, and a device, in which a pre-established point of interest (POI) index library records location coordinates of POIs. The method includes: S1. acquiring key words currently input by a user in a search box; S2. matching the key words with indexes in the POI index library, and determining names and location coordinates of POIs corresponding to the matching indexes; and S3. providing search recommendations for the user according to the names of the POIs determined in Step S2, and providing distances from the location coordinates of the POIs in the search recommendations to location coordinates of the user. When the user only wishes to acquire the distance from a current location to a POI, or wishes to acquire the distance from a current location to a POI for reference before specific positioning or making a route plan, the present invention simplifies the operation of the user and reduces network traffic.

## Description

This application claims priority to Chinese Patent Application No. 201310085022.8, filed with the Chinese Patent Office on March 18, 2013 and entitled "SEARCH RECOMMENDATION METHOD AND APPARATUS FOR MAP SEARCH", which is incorporated herein by reference in its entirety.

### BACKGROUND

### Technical Field

The present invention relates to the field of computer application technologies, and in particular, to a search recommendation method and apparatus for map search, a computer storage medium, and a device.

### Related Art

With rapid development of computer technologies, search engines have become an important means for acquiring information and are extensively used in various fields, among which map search develops rapidly and is widely applied.

Currently, the map search mainly provides the following services: location query, public transportation query, route query and the like. For example, when a user intends to query for the location of a point of interest (POI) or the route to a POI or the distance away from a POI, the most commonly used method is that the user inputs the name of the POI in a search box provided by the map application, and then the map search engine finds specific location information of the POI on the map and labels the found information for the user. If the user intends to further query for the route to the POI, a "Go to This Place" option is provided after the user clicks a location identifier of the POI on the map application, and the user inputs information about a current place of departure of the user, and the map search engine presents a route plan from the current location of the user to the POI. If the user intends to further acquire the distance from the current location to the POI, the user manually acquires the distance from the current location of the user to the POI by using a distance measuring tool provided on the map application, or directly acquires from the route plan the length of each route provided by the map search engine.

However, a user has to perform the above operations when the user only needs to know the distance from the current location to a POI, or when the user hopes to take into account the distance from the current location to a POI before deciding whether to go to the POI. Therefore, the operations are complicated and network traffic is wasted.

### SUMMARY

In view of the above, the present invention provides a search recommendation method and apparatus for map search, a computer storage medium, and a device, so that when a user only wishes to acquire the distance from a current location to a POI, or wishes to acquire the distance from a current location to a POI for reference before specific positioning or making a route plan, the operation is simpler and network traffic is reduced.

The specific technical solutions are described as follows.

The present invention provides a search recommendation method for map search, in which a pre-established POI index library records location coordinates of POIs. The method includes:
S1. acquiring key words currently input by a user;
S2. matching the key words with indexes in the POI index library, and determining names and location coordinates of POIs corresponding to the matching indexes; and
S3. providing search recommendations for the user according to the names of the POIs determined in Step S2, and providing distances from the location coordinates of the POIs in the search recommendations to location coordinates of the user.

According to a preferred implementation manner of the present invention, in the pre-established POI index library, indexes are established by using the first N characters of the name of each POI or by using the first N characters of a core part in the name of each POI, where N is each positive integer smaller than a preset value.

According to a preferred implementation manner of the present invention, if the user uses a mobile terminal, the location coordinates of the user are determined by using a positioning function of the mobile terminal; and
if the user uses a fixed terminal, the location coordinates of the user are determined by using an IP address of the fixed terminal.

According to a preferred implementation manner of the present invention, in Step S3, the providing search recommendations for the user according to the names of the POIs determined in Step S2 includes:
sorting the names of the POIs determined in Step S2 according to at least one of matching degrees between the key words and the names of the POIs determined in Step S2 and search popularities of the names of the POIs determined in Step S2; and
using the first M names of the POIs as the search recommendations to be provided for the user, where M is a preset positive integer.

According to a preferred implementation manner of the present invention, the distances between the determined location coordinates of the POIs and the location coordinates of the user are calculated in Step S2; or
only the distances between the location coordinates of the POIs corresponding to the names of the POIs in the search recommendations and the location coordinates of the user are calculated in Step S3.

According to a preferred implementation manner of the present invention, when the search recommendations are provided, the names of the POIs in the search recommendations are presented according to a sorting result.

According to a preferred implementation manner of the present invention, the search recommendations are provided in a manner of a drop-down box, and the distances between the location coordinates of the POIs in the search recommendations and the location coordinates of the user are correspondingly presented beside the search recommendations in the drop-down box.

The present invention further provides a search recommendation apparatus for map search, in which a pre-established POI index library records location coordinates of POIs. The apparatus includes:
an input acquisition unit, configured to acquire key words currently input by a user;
an index list querying unit, configured to match the key words with indexes in the POI index library, and determine names and location coordinates of POIs corresponding to the matching indexes; and
a search recommendation unit, configured to provide search recommendations for the user according to the names of the POIs determined by the index list querying unit, and provide distances from the location coordinates of the POIs in the search recommendations to location coordinates of the user.

According to a preferred implementation manner of the present invention, the apparatus further includes:
an index library establishing unit, configured to establish the POI index library, and establish indexes by using the first N characters of the name of each POI or by using the first N characters of a core part in the name of each POI in the POI index library, where N is each positive integer smaller than a preset value.

According to a preferred implementation manner of the present invention, the apparatus further includes:
a positioning unit, configured to: if the user uses a mobile terminal, determine the location coordinates of the user by using a positioning function of the mobile terminal; and if the user uses a fixed terminal, determine the location coordinates of the user by using an IP address of the fixed terminal.

According to a preferred implementation manner of the present invention, when providing the search recommendations, the search recommendation unit sorts the names of the POIs determined by the index list querying unit according to at least one of matching degrees between the key words and the names of the POIs determined by the index list querying unit and search popularities of the names of the POIs determined by the index list querying unit, and uses the first M names of the POIs as the search recommendations to be provided for the user, where M is a preset positive integer.

According to a preferred implementation manner of the present invention, the apparatus further includes:
a distance calculating unit, configured to calculate the distances between the location coordinates of the POIs determined by the index list querying unit and the location coordinates of the user, or calculate only the distances between the location coordinates of the POIs corresponding to the names of the POIs in the search recommendations and the location coordinates of the user.

According to a preferred implementation manner of the present invention, when providing the search recommendations, the search recommendation unit presents the names of the POIs in the search recommendations according to a sorting result.

According to a preferred implementation manner of the present invention, the search recommendation unit provides the search recommendations in a manner of a drop-down box, and presents the distances between the location coordinates of the POIs in the search recommendations and the location coordinates of the user correspondingly beside the search recommendations in the drop-down box.

The present invention further provides a computer storage medium. The computer storage medium is encoded to store a computer program, and when the program is executed by one or more computers, the one or more computers perform the following operations:
acquiring key words currently input by a user;
matching the key words with indexes in a POI index library, and determining names and location coordinates of POIs corresponding to the matching indexes; and
providing search recommendations for the user according to the determined names of the POIs, and providing distances from the location coordinates of the POIs in the search recommendations to location coordinates of the user.

The present invention further provides a device, which includes at least one processor, a memory, and at least one computer program. The at least one computer program is stored in the memory and is executed by the at least one processor. The computer program includes an instruction for performing the following operations:
acquiring key words currently input by a user;
matching the key words with indexes in a POI index library, and determining names and location coordinates of POIs corresponding to the matching indexes; and
providing search recommendations for the user according to the determined names of the POIs, and providing distances from the location coordinates of the POIs in the search recommendations to location coordinates of the user.

It can be seen from the above technical solutions that, according to the present invention, when the search recommendations are provided in map search, the distances from the location coordinates of the POIs in the search recommendations to the location coordinates of the user are provided. If the user only wishes to acquire the distance from a current location to a POI, or wishes to acquire the distance from a current location to a POI for reference before specific positioning or making a route plan, the user can obtain the desired information directly from the search recommendations, even without inputting the entire key words, and the user does not need to perform a series of operations to obtain the desired information after acquiring the search results. Apparently, the operation is simpler and network traffic is reduced.

### BRIEF DESCRIPTION OF THE DRAWINGS

FIG. 1 is a flowchart of a search recommendation method for map search according to Embodiment 1 of the present invention;
FIG. 2 is an exemplary diagram of search recommendations provided according to Embodiment 1 of the present invention; and
FIG. 3 is a structural diagram of a search recommendation apparatus for map search according to Embodiment 2 of the present invention.

### DETAILED DESCRIPTION

To make the objectives, technical solutions, and advantages of the present invention comprehensible, exemplary embodiments of the present invention are described in detail below with reference to the accompanying drawings.

### Embodiment 1

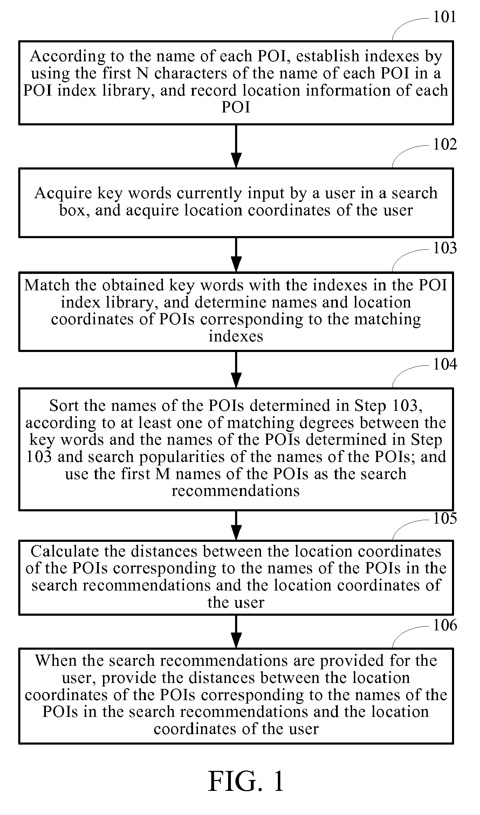

FIG. 1 is a flowchart of a search recommendation method for map search according to Embodiment 1 of the present invention. This embodiment mainly includes two implementing stages: offline stage and online stage. The establishment of a database used for providing search recommendations is mainly performed in the offline stage. In the embodiments of the present invention, the database is mainly used for map search and is referred to as a POI index library. The real-time capturing of key words input by a user and the providing of search recommendations are mainly performed in the online stage. The two stages are described in detail below with reference to FIG. 1.

As shown in FIG. 1, the offline stage mainly includes Step 101:
Step 101: According to the name of each POI, establish indexes by using the first N characters of the name of each POI in a POI index library, and record location information of each POI.

The POI information is collected in advance, and the collecting manner of the POI information is not limited herein, and only the content in the POI information database is used. The POI information generally includes: the name, type, and location coordinates of a POI. In this application, the name and the location coordinates of the POI are adopted, and the location coordinates of the POI are generally presented as latitude and longitude coordinates.

As search recommendations are presented in real time with gradual input of key words by a user, to cater for the sequence and manner of inputting the key words by the user to the maximum extent, when the indexes are established according to the name of each POI in the POI index library, the indexes may be established by using the first N characters of the name of each POI, where N is each positive integer smaller than a preset value. The preset value may be a fixed value, or a percentage of the length of the name of the POI, or the total length of the name of the POI.

The location information of each POI is recorded in the POI index library, and the location information of the corresponding POI can be found through the index.

Taking the name of a POI "Nanjing University Jinling College" as an example, the following indexes: "Nan", "Nanjing", "Nanjing Uni", "Nanjing University", "Nanjing University Jin", and "Nanjing University Jinling" can be established. Then, the location information of the POI is recorded, and the final state of "Nanjing University Jinling College" in the POI index library is shown in Table 1.

**Table 1**

| Index | Name of POI | Location Information of POI |
|---|---|---|
| Nan | Nanjing University Jinling College | 32.176339, 118.703456 |
| Nanjing | | |
| Nanjing Uni | | |
| Nanjing University | | |
| Nanjing University Jin | | |
| Nanjing University Jinling | | |

Considering that redundant information exists in the names of some POIs, indexes may be established by using the first N characters of a core part in the name of each POI, where N is each positive integer smaller than a preset value. The preset value may be a fixed value, or a percentage of the length of the core part in the name of the POI, or the total length of the core part in the name of the POI. The core part may be the remaining information of the name of the POI after removal of the redundant information. The redundant information can be determined by using an existing technology, which is not limited herein.

Taking the name of a POI "Beijing Zhongguancun Hospital" as an example, because the presence or absence of "Beijing" does not influence the semantic expression of the POI, "Beijing" is regarded as redundant information in the name of the POI, "Zhongguancun Hospital" is the core part, and the following indexes: "Zhong", "Zhongguan", "Zhongguancun", and "Zhongguancun Hos" can be established.

The online stage mainly includes the following step:
Step 102: Acquire key words currently input by a user in a search box, and acquire location coordinates of the user.

When the user starts searching, the key words input by the user are tracked. It should be noted that, generally every time the user inputs a key word, the search recommendation process in the online stage starting from Step 102 is performed, and only one process is taken as an example for illustration in this embodiment of the present invention.

It should be further noted that, the acquisition of the location coordinates of the user is not limited to be performed in this step, and can be implemented in any stage before the search recommendations are provided for the user. The objective is to calculate the distances between the location coordinates of the POIs in the search recommendations and the location coordinates of the user.

If the user uses a mobile terminal, for example, a mobile phone or a tablet, to carry out map search, the location coordinates of the user can be determined by using a positioning function of the mobile terminal. For example, a positioning result obtained by using the GPS or obtained in other positioning manners, and a positioning result obtained by using any positioning manner in the prior art can be adopted in the embodiments of the present invention. If the user uses a fixed terminal, for example, a PC, to carry out map search, the location coordinates of the user can be determined by using an IP address of the fixed terminal.
Step 103: Match the obtained key words with the indexes in the POI index library, and determine names and location coordinates of POIs corresponding to the matching indexes.
Step 104: Sort the names of the POIs determined in Step 103, according to at least one of matching degrees between the key words and the names of the POIs determined in Step 103 and search popularities of the names of the POIs; and use the first M names of the POIs as the search recommendations.

The quantity of the names of the POIs obtained through matching in Step 103 may be large and exceed the quantity limit of the search recommendations, so some of the names of the POIs need to be selected as the search recommendations and sorted in the search recommendations. Therefore, when the search recommendations are selected, the names of the POIs obtained through matching are sorted first, and the sorting may be implemented according to at least one of matching degrees between the key words and the names of the POIs and search popularities of the names of the POIs. The matching degree between two texts may be calculated in a manner in the prior art, and taking the calculation of similarity for example, a higher similarity indicates a higher matching degree. The search popularities of the names of the POIs may be determined by the times of search. Other factors may be taken into consideration during sorting, for example, whether the POI is in the same city as the current location of the user, and in this case, the names of the POIs in the same city as the current location of the user have higher priority in the recommendations.

After sorting, the first M names of the POIs are selected as the search recommendations, where M is a preset positive integer. Assume that the key words currently input by the user are "Nanjing Uni", the key words are matched with the indexes in the POI index library to obtain "Nanjing University", "Graduate School of Nanjing University", " Nanjing Great Hotel", "Nanjing Food Stalls", "Nanjing University Jinling College", "Nanjing University Press", "Nanjing Bright Square" and the like, and if M is set to 4 after sorting, the first four names of the POIs are selected as the search recommendations, that is, "Nanjing University", "Nanjing Bright Square", "Nanjing University Jinling College", and "Nanjing Great Hotel".
Step 105: Calculate the distances between the location coordinates of the POIs corresponding to the names of the POIs in the search recommendations and the location coordinates of the user.

It should be noted that, the distances may also be calculated in Step 103, that is, the distances between the location coordinates of the determined POIs and the location coordinates of the user are calculated, and the distances corresponding to the names of the POIs in the search recommendations are determined in Step 106. However, the amount of calculation in this manner is large, so Step 105 is a preferred implementation manner.
Step 106: When the search recommendations are provided for the user, provide the distances between the location coordinates of the POIs corresponding to the names of the POIs in the search recommendations and the location coordinates of the user.

The search recommendations can be provided for the user in various presentation manners, and a common manner is to provide the search recommendations in a manner of a drop-down box. Meanwhile, the distances between the location coordinates of the POIs and the location coordinates of the user may be presented beside the search recommendations in the drop-down box. Definitely, other manners are also applicable, which will not be enumerated herein.

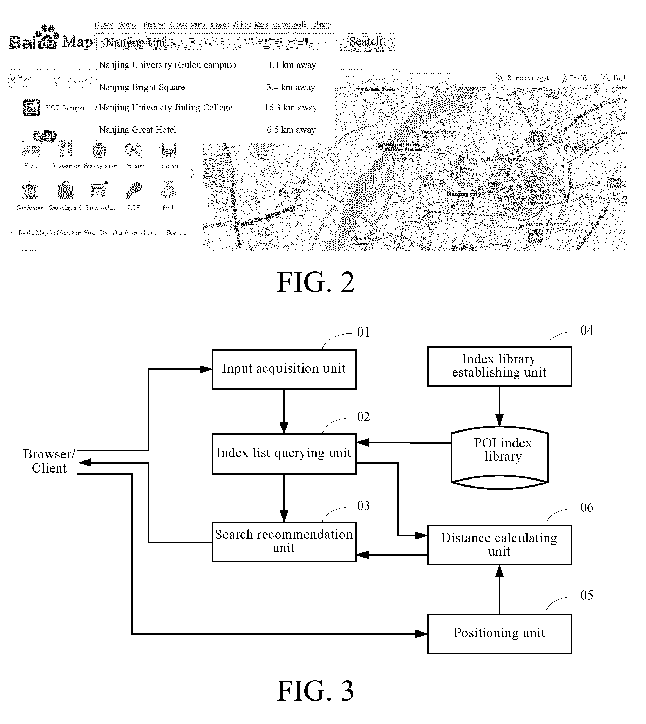

Continued from the above example, the search recommendations for "Nanjing Uni" input by the user are "Nanjing University", "Nanjing Bright Square", "Nanjing University Jinling College", and "Nanjing Great Hotel", and the results are shown in FIG. 2. Assume that the user intends to go to "Nanjing University Jinling College", and wishes to acquire the distance away from "Nanjing University Jinling College" for reference before deciding whether to go. By using the manner provided in this embodiment of the present invention, the distance from the current location of the user to "Nanjing University Jinling College" is acquired from the search recommendations, and the user even does not need to input the entire key words. Moreover, the user does not need to acquire the distance through subsequent operations like manual measurement or through route information after obtaining the search result of "Nanjing University Jinling College" in the map search engine. Therefore, the operation is simpler and network traffic is significantly reduced.

The method provided by the present invention is illustrated in detail above, and a search recommendation apparatus provided by the present invention is described in detail below with reference to Embodiment 2.

### Embodiment 2

FIG. 3 is a structural diagram of a search recommendation apparatus for map search according to Embodiment 2 of the present invention. The apparatus is generally disposed on a server end of a map search engine, and interacts with a browser or client used by a user. The apparatus works based on a pre-established POI index library, and the POI index library records location coordinates of POIs. As shown in FIG. 3, the apparatus includes: an input acquisition unit 01, an index list querying unit 02, and a search recommendation unit 03. The apparatus further includes: an index library establishing unit 04, a positioning unit 05, and a distance calculating unit 06.

The index library establishing unit 04 implements the operations in the offline stage, and the other units implement the operations in the online stage.

Specifically, the index library establishing unit 04 is configured to establish the POI index library, establish indexes by using the first N characters of the name of each POI in the POI index library, where N is each positive integer smaller than a preset value, and record location coordinates of each POI in the POI index library. The preset value may be a fixed value, or a percentage of the length of the name of the POI, or the total length of the name of the POI.

Considering that redundant information exists in the names of some POIs, the index library establishing unit 04 may also establish indexes by using the first N characters of a core part in the name of each POI, where N is each positive integer smaller than a preset value, and record location coordinates of each POI in the POI index library. The preset value may be a fixed value, or a percentage of the length of the core part in the name of the POI, or the total length of the core part in the name of the POI. The core part may be the remaining information of the name of the POI after removal of the redundant information. The redundant information can be determined by using an existing technology, which is not limited herein.

When the user starts searching, the input acquisition unit 01 acquires key words currently input by a user in a search box. The index list querying unit 02 matches the key words with the indexes in the POI index library, and determines names and location coordinates of POIs corresponding to the matching indexes.

The key words input by the user in the search box are acquired through tracking and then provided for the server end of the map search engine by the browser or client used by the user, so the input acquisition unit 01 actually acquires the key words that are provided by the browser or client and are currently input by the user in the search box.

The search recommendation unit 03 provides search recommendations for the user according to the names of the POIs determined by the index list querying unit 02, and provides distances from the location coordinates of the POIs in the search recommendations to location coordinates of the user.

The search recommendations and the distances provided by the search recommendation unit 03 are actually provided for the browser or client used by the user, and can be presented on the browser or client in various manners. A common method is to provide the search recommendations in a manner of a drop-down box. Meanwhile, the distances between the location coordinates of the POIs and the location coordinates of the user may be presented beside the search recommendations in the drop-down box. Definitely, other manners are also applicable, which will not be enumerated herein.

The positioning unit 05 is configured to determine the location coordinates of the user, and specifically: if the user uses a mobile terminal, determine the location coordinates of the user by using a positioning function of the mobile terminal, for example, obtain a positioning result by using the GPS; and if the user uses a fixed terminal, determine the location coordinates of the user by using an IP address of the fixed terminal. The positioning unit 05 can directly invoke positioning results provided by other positioning systems, that is, serves as an interface.

When providing the search recommendations, the search recommendation unit 03 sorts the names of the POIs determined by the index list querying unit according to at least one of matching degrees between the key words and the names of the POIs determined by the index list querying unit 02 and search popularities of the names of the POIs determined by the index list querying unit, and uses the first M names of the POIs as the search recommendations to be provided for the user, where M is a preset positive integer. The matching degree between two texts may be calculated in a manner in the prior art, and taking the calculation of similarity for example, a higher similarity indicates a higher matching degree. The search popularities of the names of the POIs may be determined by the times of search. Other factors may be taken into consideration during sorting, for example, whether the POI is in the same city as the current location of the user, and in this case, the names of the POIs in the same city as the current location of the user have higher priority in the recommendations.

To enable the search recommendation unit 03 to provide the distances from the location coordinates of the POIs in the search recommendations to the location coordinates of the user when providing the search recommendations for the user, the distance calculating unit 06 may adopt one of the following two manners:
Manner 1: Calculate the distances between the location coordinates of the POIs determined by the index list querying unit 02 and the location coordinates of the user. Then, the search recommendation unit 03 determines the distances corresponding to the names of the POIs in the search recommendations when providing the search recommendations. However, the amount of calculation in this manner is large, so Manner 2 is preferred.
Manner 2: Calculate only the distances between the location coordinates of the POIs corresponding to the names of the POIs in the search recommendations and the location coordinates of the user. Then, the search recommendation unit 03 directly adopts the calculating results of the distances when providing the search recommendations. FIG. 3 shows Manner 2.

In the embodiments of the present invention, it should be understood that the disclosed apparatus and method may be implemented in other manners. For example, the described apparatus embodiment is merely exemplary. The division of units is merely made according to logical functions, and there may be other division manners in actual implementation. In addition, functional units in the embodiment of the present invention may be integrated into one processing unit, or each of the units may exist alone physically, or two or more units are integrated into one unit. The integrated unit may be implemented in the form of hardware, or in the form of hardware plus a software functional unit.

The integrated unit implemented in the form of a software functional unit may be stored in a computer readable storage medium. The software functional unit is stored in a storage medium, and contains several instructions for instructing a computer device (for example, a personal computer, a server, or a network device) or a processor to perform some steps of the method according to the embodiments of the present invention. The storage medium includes any medium that can store program code, such as a USB flash drive, a removable hard disk, a read-only memory (ROM), a random access memory (RAM), a magnetic disk, or an optical disc.

The above description is merely exemplary embodiments of the present invention, which are not intended to limit the scope of the present invention, and any modification, equivalent replacement, and improvement made based on the spirit and principle of the present invention shall fall within the protection scope of the present invention.

## Claims

1. A search recommendation method for map search, wherein a pre-established point of interest (POI) index library records location coordinates of POIs, the method comprising:
S1. acquiring key words currently input by a user;
S2. matching the key words with indexes in the POI index library, and determining names and location coordinates of POIs corresponding to the matching indexes; and
S3. providing search recommendations for the user according to the names of the POIs determined in Step S2, and providing distances from the location coordinates of the POIs in the search recommendations to location coordinates of the user.

2. The method according to claim 1, wherein in the pre-established POI index library, indexes are established by using the first N characters of the name of each POI or by using the first N characters of a core part in the name of each POI, wherein N is each positive integer smaller than a preset value.

3. The method according to claim 1, wherein if the user uses a mobile terminal, the location coordinates of the user are determined by using a positioning function of the mobile terminal; and
if the user uses a fixed terminal, the location coordinates of the user are determined by using an IP address of the fixed terminal.

4. The method according to claim 1, wherein in Step S3, the providing search recommendations for the user according to the names of the POIs determined in Step S2 comprises:
sorting the names of the POIs determined in Step S2 according to at least one of matching degrees between the key words and the names of the POIs determined in Step S2 and search popularities of the names of the POIs determined in Step S2; and
using the first M names of the POIs as the search recommendations to be provided for the user, wherein M is a preset positive integer.

5. The method according to claim 1 or 4, wherein the distances between the determined location coordinates of the POIs and the location coordinates of the user are calculated in Step S2; or
only the distances between the location coordinates of the POIs corresponding to the names of the POIs in the search recommendations and the location coordinates of the user are calculated in Step S3.

6. The method according to claim 4, wherein when the search recommendations are provided, the names of the POIs in the search recommendations are presented according to a sorting result.

7. The method according to claim 1, 4, or 6, wherein the search recommendations are provided in a manner of a drop-down box, and the distances between the location coordinates of the POIs in the search recommendations and the location coordinates of the user are correspondingly presented beside the search recommendations in the drop-down box.

8. A search recommendation apparatus for map search, wherein a pre-established point of interest (POI) index library records location coordinates of POIs, the apparatus comprising:
an input acquisition unit, configured to acquire key words currently input by a user;
an index list querying unit, configured to match the key words with indexes in the POI index library, and determine names and location coordinates of POIs corresponding to the matching indexes; and
a search recommendation unit, configured to provide search recommendations for the user according to the names of the POIs determined by the index list querying unit, and provide distances from the location coordinates of the POIs in the search recommendations to location coordinates of the user.

9. The apparatus according to claim 8, further comprising:
an index library establishing unit, configured to establish the POI index library, and establish indexes by using the first N characters of the name of each POI or by using the first N characters of a core part in the name of each POI in the POI index library, wherein N is each positive integer smaller than a preset value.

10. The apparatus according to claim 8, further comprising:
a positioning unit, configured to: if the user uses a mobile terminal, determine the location coordinates of the user by using a positioning function of the mobile terminal; and if the user uses a fixed terminal, determine the location coordinates of the user by using an IP address of the fixed terminal.

11. The apparatus according to claim 8, wherein when providing the search recommendations, the search recommendation unit sorts the names of the POIs determined by the index list querying unit according to at least one of matching degrees between the key words and the names of the POIs determined by the index list querying unit and search popularities of the names of the POIs determined by the index list querying unit, and uses the first M names of the POIs as the search recommendations to be provided for the user, wherein M is a preset positive integer.

12. The apparatus according to claim 8 or 11, further comprising:
a distance calculating unit, configured to calculate the distances between the location coordinates of the POIs determined by the index list querying unit and the location coordinates of the user, or calculate only the distances between the location coordinates of the POIs corresponding to the names of the POIs in the search recommendations and the location coordinates of the user.

13. The apparatus according to claim 11, wherein when providing the search recommendations, the search recommendation unit presents the names of the POIs in the search recommendations according to a sorting result.

14. The apparatus according to claim 8, 11, or 13, wherein the search recommendation unit provides the search recommendations in a manner of a drop-down box, and presents the distances between the location coordinates of the POIs in the search recommendations and the location coordinates of the user correspondingly beside the search recommendations in the drop-down box.

15. A computer storage medium, wherein the computer storage medium is encoded to store a computer program, and when the program is executed by one or more computers, the one or more computers perform the following operations:
acquiring key words currently input by a user;
matching the key words with indexes in a point of interest (POI) index library, and determining names and location coordinates of POIs corresponding to the matching indexes; and
providing search recommendations for the user according to the determined names of the POIs, and providing distances from the location coordinates of the POIs in the search recommendations to location coordinates of the user.

16. A device, comprising at least one processor, a memory, and at least one computer program, wherein the at least one computer program is stored in the memory and is executed by the at least one processor, and the computer program comprises an instruction for performing the following operations:
acquiring key words currently input by a user;
matching the key words with indexes in a point of interest (POI) index library, and determining names and location coordinates of POIs corresponding to the matching indexes; and
providing search recommendations for the user according to the determined names of the POIs, and providing distances from the location coordinates of the POIs in the search recommendations to location coordinates of the user.
